# EUROPEAN PATENT SPECIFICATION

(11) **EP 2 876 915 B1**
(45) Date of publication and mention of the grant of the patent: **19.09.2018**
(21) Application number: 14192351.6
(22) Date of filing: 07.11.2014
(51) Int. Cl.: H04W 8/30, H04W 24/04, H04W 88/14, H04W 92/24, H04W 12/04, H04W 12/06

(54) **Proxy MME**
Proxy MME
Proxy MME

(30) Priority: 22.11.2013 US 201314087545
(43) Date of publication of application: 27.05.2015
(73) Proprietor: General Dynamics C4 Systems, Inc., Scottsdale AZ 85257-3812 (US)
(72) Inventor: Zakrzewski, Robert, Bristol, BS15 8EB (GB)
(74) Representative: Optimus Patents Limited

(56) References cited:
- US-A1- 2010 278 108
- US-A1- 2011 235 505
- US-A1- 2012 023 360
- US-A1- 2012 236 708
- FRANK A ZDARSKY ET AL: "Localization of Data and Control Plane Traffic in Enterprise Femtocell Networks", VEHICULAR TECHNOLOGY CONFERENCE (VTC SPRING), 2011 IEEE 73RD, IEEE, 15 May 2011 (2011-05-15), pages 1-5, XP031897022, DOI: 10.1109/VETECS.2011.5956622 ISBN: 978-1-4244-8332-7

## Description

### Field of the invention

The field of the invention relates to methods and apparatus for supporting control plane data, and in particular to management of mobility entities within a control plane data network.

### Background of the Invention

A recent development in third generation (3G) wireless communications is the long term evolution (LTE) cellular communication standard, sometimes referred to as 4^{th} generation (4G) systems. Both of these technologies are compliant with third generation partnership project (3GPP™) standards. Irrespective of whether LTE spectral allocations use existing second generation (2G) or 3G allocations being re-farmed for fourth generation (4G) systems, or new spectral allocations for existing mobile communications, they will generally use paired spectrum for frequency division duplex (FDD) operation.

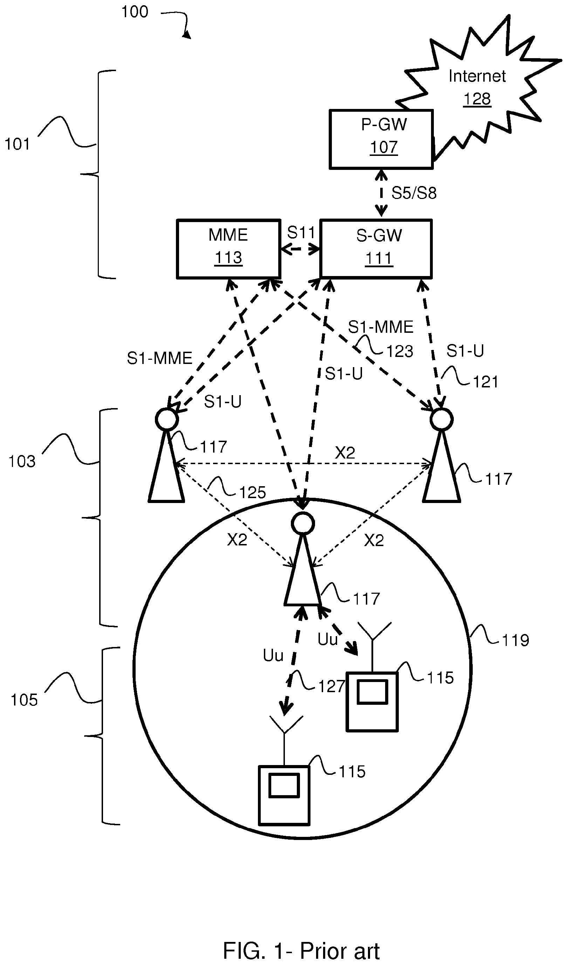

Referring to FIG. 1, an example of a simplified evolved packet system (EPS) 100 is illustrated comprising, part of an evolved packet core (EPC) network 101, access network 103 and user equipment (UE) domain 105. In this case, EPC network 101 comprises a packet data network (PDN), for example the Internet, 128, a packet data network gateway (P-GW) 107, a serving gateway (S-GW) 111 and a mobility management entity (MME) 113. The P-GW 107 is situated between the PDN 128 and the S-GW 111, and may include responsibility for IP address allocation for UEs 115, as well as Quality of Service (QoS) enforcement and flow based charging according to rules of a policy control and charging rules function (not shown). The P-GW 107 is responsible for filtering of downlink user internet protocol (IP) packets into different QoS-based bearers. The P-GW 107 also serves as a mobility anchor for inter-working with non-3GPP technologies such as CDMA2000 and WiMAX™ networks. All IP packets are transferred from the P-GW 107 to the S-GW 111 via an S5/S8 interface, which serves as a local mobility anchor for data bearers when user equipment (UEs) 115 move between base stations/eNodeBs 117. The S-GW 111 also retains the information about the bearers when the UEs are in idle state (known as evolved packet system, EPS, Connection Management IDLE (ECM-IDLE)) and temporarily buffers downlink data while the MME 113 initiates paging of the UEs 115 to re-establish the bearers. In addition, the S-GW 111 performs some administrative functions in the access network 103, such as collecting information for charging and legal interception. It also serves as a mobility anchor for inter-working with other 3GPP technologies such as general packet radio service (GPRS) and universal mobile telecommunications service (UMTS). The S-GW 111 is coupled to the MME 113 via an S11 interface.

Access network 103, defined by a number of inter-connected eNodeBs 117, is generally utilised when UEs 115 are in a network's coverage area 119, thereby allowing UEs 115 to solely communicate with each other via the access network 103. Generally, the access network 103 communicates with the EPC network 101 via S1-U 121 and S1-MME 123 interfaces. eNodeBs 117 are operable to communicate with each other within the access network 103 via X2 interfaces 125. Further, UEs 115 are operable to communicate with eNodeBs 117 via a Uu interface, otherwise known as radio interface 127. Access network 103 is generally utilised when UEs 115 are within the access network's 103 network coverage 119, allowing them to communicate with one another. The access network 103 facilitates communication by receiving control plane data and user plane data from each eNodeB 117 and from UEs 115, and transmitting this control plane data and user plane data to the other eNodeBs 117 within the access network 103. Different eNodeBs 117 within the access network 103 may utilise different receive and transmit frequencies, for example if Frequency Division Duplexing (FDD) is utilised. Further, different eNodeBs 117 within the access network 103 may utilise different waveforms, signal modulation and coding schemes between the different eNodeBs 117. Specifically, in a generic LTE system, referred to as E-UTRAN, the Uu radio interface 127 generally utilises Orthogonal Frequency Division Multiple Access (OFDMA) in the Downlink and Single Carrier Frequency Division Multiple Access (SC-FDMA) in the Uplink. OFDMA distributes subcarriers to different users (UEs) at the same time, allowing multiple users to be scheduled to receive data simultaneously. Generally, subcarriers are allocated in contiguous groups for simplicity and to reduce any overhead of indicating which subcarriers have been allocated to each user. SC-FDMA is generally utilised in the Uplink case as it has a lower peak-to-average power ratio compared to OFDMA, which can benefit mobile terminal devices in terms of transmit power efficiency, for example. As discussed above, FDD may be utilised resulting in differing transmit and receive carrier frequencies. Further, Time Division Duplexing (TDD) may be utilised, resulting in separate outward and return signals.

A potential problem may occur when, for example, the MME 113 within the EPC network 101 fails to operate correctly. A single MME 113 is allocated to UEs 115 operating in a geographical area and responsive to communications to/from one or more eNodeBs 117. If a failure occurs with the MME 113, at least user plane and control plane data will be affected. Further, UEs 115 may not be able to access services offered in the EPC network 101 if such a failure occurred. Therefore, in some cases, it may be desirable, for example for public safety systems, to be able to offer services to local users despite failures within the EPC network 101. Further it also may be desirable to maintain service continuity and prevent any data flow interruption while services are being provided that would have happened otherwise if standard recovery techniques were used.

Document titled 'Localization of Data and Control Plane Traffic in Enterprise Fentocell Networks, by Frank A. Zdarsky et al., published in IEEE VTC Spring 2011, describes a system that introduces a proxy MME within an EPC network. US 2012/0023360 A1 describes an option to have a back-up MME. US 2011/235505 describes a system with a pool of possible back-up MMEs to use in case an MME fails to operation US 2010/278108 A1 describes a system with a MME and a proxy MME that relays control messages to the MME.

### Statements of Invention

According to a first aspect of the invention, a wireless communications system supporting control plane data is illustrated, comprising: a terminal device; a first mobility management entity, MME, configured to support control plane data for the terminal device; at least one second MME operably coupled via a backhaul link to the first MME, and also configured to support control plane data for the terminal device, wherein, according to a first mode of operation, a processor of the at least one second MME is arranged to build and update context information associated with the terminal device by monitoring at least a subset of the control plane data between the terminal device and the first MME, following a receipt of a security key, K_{ASME}, or a whole authentication vector from the first MME, such that the at least one second MME is able to use the same security association between the terminal device and the first MME, wherein the processor of the at least one second MME is further arranged to detect either a communication link failure between the at least one second MME and the first MME via the backhaul link or that the first MME is deemed non-operational, and in response thereto switch to a second mode of operation , where the at least one second MME is arranged to perform at least a subset of the MME functionality of the first MME.

Optionally, the processor may be arranged to modify at least a subset of control plane data to be handled by the first MME.

Optionally, the processor may be arranged to perform at least one of: forward control plane signalling to relevant terminal devices in ECM-IDLE mode reallocate a Globally Unique Temporary Identity (GUTI) to point to the second MME terminate received Non-Access Stratum, NAS, protocol messages.

Optionally, the processor may be operably coupled to a memory element arranged to store the terminal device context information.

Optionally, the at least one second MME processor may be arranged to both terminate and handle: NAS protocol messages, S1AP protocol messages and GTP-c messages via a S11 interface.

Optionally, the at least one second MME processor may be arranged to track the terminal device mobility in an ECM idle mode and arrange a S1 handover in ECM connected mode of the terminal device.

Optionally, the at least one second MME processor may be arranged to perform one or more of the following in the second mode of operation: trigger or coordinate paging with the terminal device; manage an authentication (AKA) procedure with the terminal device; handle a security mode command procedure with the terminal device; choose a target MME when relocation is required at handover for the terminal device; invoke one or more core network node selection functions; manage ECM-IDLE/ECM-CONNECTED transitions of the terminal device.

Optionally, the at least one second MME processor may be arranged to invoke one or more core network node selection functions that operably re-couples to the first MME when a connection thereto becomes operational.

Optionally, the at least one second MME processor may trigger the terminal device to initiate a tracking area update, TAU, process to cause the terminal device context information at the at least one second MME to be transferred to the first MME, and the at least one second MME reverts to a proxy mode of operation.

According to a second aspect of the invention, a proxy mobility management entity, MME, located in a wireless communications system that comprises an additional first MME is illustrated, wherein the first MME is operational and operably coupled to the proxy MME such that they are both configured to support control plane data for the terminal device. The proxy MME comprises a processor arranged to: build and update context information associated with the terminal device; receive a security key, K_{ASME}, or a whole authentication vector from the first MME, such that the at least one proxy MME is able to use the same security association between the terminal device and the first MME; monitor at least a subset of the control plane data between the terminal device and the first MME; detect either a communication link failure between the at least one second MME and the first MME via the backhaul link or that the first MME is deemed non-operational, and in response thereto switch to a second mode of operation; where the proxy MME performs at least a subset of the MME functionality of the first MME.

Optionally, the processor is arranged to perform at least one of: forward control plane signalling to relevant terminal devices in ECM-IDLE mode; reallocate a Globally Unique Temporary Identity (GUTI) to point to the second MME; terminate and handle received Non-Access Stratum, NAS, protocol messages.

According to a third aspect of the invention, a method of operation of a wireless communications system supporting control plane data with a terminal device using a first mobility management entity, MME, and a proxy MME, is illustrated. The method comprises, at the proxy MME: building and updating context information associated with the terminal device; receiving a security key, K_{ASME}, or a whole authentication vector from the first MME, such that the at least one proxy MME is able to use the same security association between the terminal device and the first MME; monitoring at least a subset of the control plane data between the terminal device and the first MME; detecting either a communication link failure between the at least one second MME and the first MME via the backhaul link or that the first MME is deemed non-operational, and in response thereto switch to a second mode of operation; and in response thereto performing at least a subset of the MME functionality of the first MME.

Optionally, a non-transitory computer program product comprising executable program code for a wireless communications system supporting control plane data with a terminal device using a first mobility management entity, MME, and a proxy MME, the executable program code operable for, when executed at the proxy MME, performing the above mentioned method.

### Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates a simplified known example of an evolved packet system.
FIG. 2 illustrates a 3GPP™ LTE cellular communication system adapted in accordance with some example embodiments of the present invention.
FIG. 3 illustrates an example block diagram of a simplified example of a wireless communications system adapted in accordance with some example embodiments of the present invention.
FIG. 4 illustrates the access network part of FIG. 3 adapted in accordance with some example embodiments of the present invention.
FIG. 5 illustrates a simplified example message sequence chart of an operation of a local (proxy) MME switching back to a main MME in accordance with some example embodiments of the present invention.
FIG. 6 illustrates a simplified example of a NAS security termination and handling operation in accordance with some example embodiments of the present invention.
FIG. 7 illustrates a simplified message sequence chart showing security aspects in a wireless communications system in accordance with some example embodiments of the present invention.
FIG. 8 illustrates a simplified example of a switching operation of a proxy MME in accordance with some example embodiments of the invention.
FIG. 9 illustrates a simplified messages sequence chart of a method of managing MMEs as a UE moves within a RAN network in accordance with some example embodiments of the invention.
FIG. 10 illustrates a simplified message sequence chart of a method of handover and proxy MME / main MME relocation in accordance with some example embodiments of the invention.
FIG. 11 illustrates a typical computing system that may be employed to implement software controlled switching between a first mode of operation, where a backhaul link may be available, and a second mode of operation where a backhaul link may not be available, adapted in accordance with some example embodiments of the invention.

### Detailed description

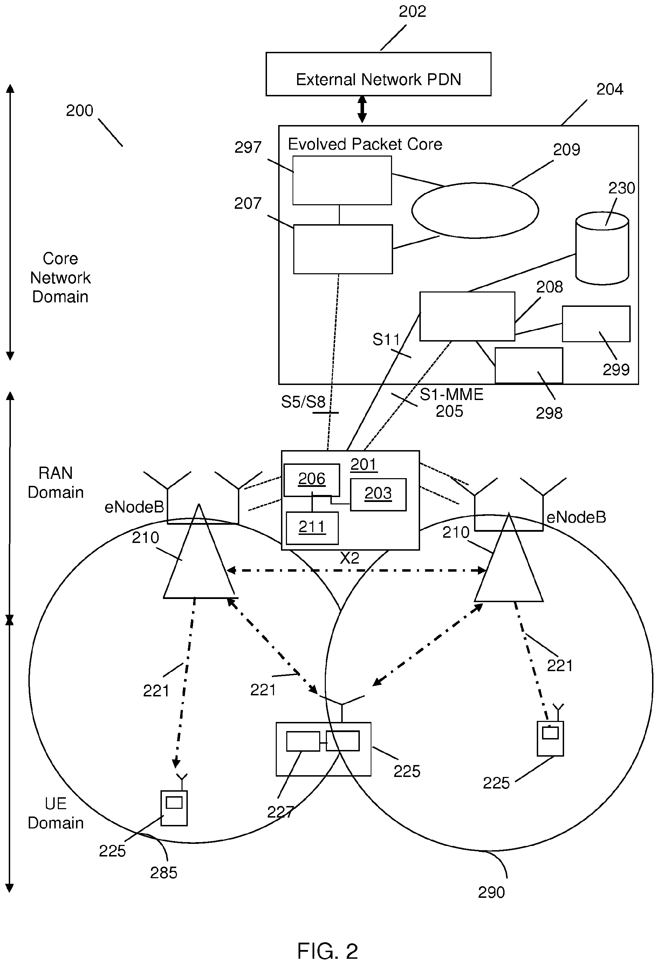

Referring now to FIG. 2, a wireless communication system 200 is shown in outline, in accordance with an example embodiment of the invention. In this example embodiment, the wireless communication system 200 is compliant with, and contains network elements capable of operating over, a 3GPP™ air-interface. In particular, the embodiment relates to a system's architecture for an Evolved-UMTS Terrestrial Radio Access Network (E-UTRAN) wireless communication system specification for long term evolution (LTE), based around OFDMA (Orthogonal Frequency Division Multiple Access) in the downlink (DL) and SC-FDMA (Single Carrier Frequency Division Multiple Access) in the uplink (UL), as described in the 3GPP™ TS 36.xxx series of specifications. Within LTE, both time division duplex (TDD) and frequency division duplex (FDD) modes are defined.

The wireless communication system 200 architecture comprises radio access network (RAN) and core network (CN) elements 204, with the core network elements 204 being coupled to external networks 202 (named Packet Data Networks (PDNs)), such as the Internet or a corporate network. The CN elements 204 comprise a packet data network gateway (P-GW) 207. In order to serve up local content, the P-GW 207 may be coupled to a content provider. The P-GW 207 may be further coupled to a policy control and rules function entity (PCRF) 297.

The PCRF 297 may be operable to control policy control decision making, as well as for controlling the flow-based charging functionalities in a policy control enforcement function PCEF (not shown) that may reside in the P-GW 207. The PCRF 297 may further provide a quality of service (QoS) authorisation class identifier and bit rate information that dictates how a certain data flow will be treated in the PCEF, and ensures that this is in accordance with a UE's 225 subscription profile.

A home subscriber server (HSS) database 230 may store UE subscription data such as QoS profiles and any access restrictions for roaming. The HSS database 230 may also store information relating to the P-GW 207 to which a UE 225 can connect. For example, this data may be in the form of an access point name (APN) or a packet data network (PDN) address. In addition, the HSS database 230 may hold dynamic information relating to the identity of a mobility management entity (MME) 208 to which a UE 225 is currently connected or registered.

The MME 208 may be further operable to control protocols running between the user equipment (UE) 225 and the CN elements 204, which are commonly known as Non-Access Stratum (NAS) protocols. The MME 208 may support at least the following functions that can be classified as: functions relating to bearer management (which may include the establishment, maintenance and release of bearers), functions relating to connection management (which may include the establishment of the connection and security between the network and the UE 225) and functions relating to inter-working with other networks (which may include the handover of voice calls to legacy networks). The MME 208 may be further coupled to an evolved serving mobile location center (E-SMLC) 298 and a gateway mobile location center (GMLC) 299.

The E-SMLC 298 may be operable to manage the overall coordination and scheduling of resources required to find the location of the UE that is attached to the RAN, in this example embodiment the E-UTRAN. The GMLC 299 may contain functionalities required to support location services (LCS). After performing an authorisation, it may send positioning requests to the MME 208 and receive final location estimates.

The P-GW 207 is operable to determine IP address allocation for a UE 225, as well as QoS enforcement and flow-based charging according to rules received from the PCRF 297. The P-GW 207 is further operable to control the filtering of downlink user IP packets into different QoS-based bearers (not shown). The P-GW 207 may also serve as a mobility anchor for inter-working with non-3GPP™ technologies such as CDMA2000 and WiMAX™ networks.

As illustrated, the CN 204 is operably connected to two eNodeBs 210, with their respective coverage zones or cells 285, 290 and a plurality of UEs 225 receiving transmissions from the CN 204 via the eNodeBs 210. In accordance with example embodiments of the present invention, at least one eNodeB 210 (amongst other elements) have been adapted to support the concepts hereinafter described.

The main component of the RAN is an eNodeB (an evolved NodeB) 210, which performs many standard base station functions and is connected to the CN 204 via an S5/S8 interface and to the UEs 225 via a Uu interface. A wireless communication system will typically have a large number of such infrastructure elements where, for clarity purposes, only a limited number are shown in FIG. 2. The eNodeBs 210 control and manage the radio resource related functions for a plurality of wireless subscriber communication units/terminals (or user equipment (UE) 225 in 3GPP™ nomenclature). Each of the UEs 225 comprise a transceiver unit 227 operably coupled to signal processing logic (with one UE illustrated in such detail for clarity purposes only). The system comprises many other UEs 225 and eNodeBs 210, which for clarity purposes are not shown.

In the evolved packet system 100 of FIG. 1, a single MME 113 is allocated per UE, which accesses external PDN 128, which in this illustration is the Internet. If this MME 113 becomes unavailable, control plane and user plane data will be adversely affected and it may not be possible for UEs 115 to access services offered in the EPC system 100.

Thus, in accordance with some examples of FIG.2, a local (proxy) EPC 201 may be implemented within the wireless communications system 200, which may have at least some of the functionality of the main EPC 204. In examples of the invention, the term 'local' may be interchanged with the term 'proxy.

In some examples, the local EPC 201 may be situated in close proximity to the RAN domain. In other examples, the local EPC 201 may be situated close to an edge of the network domain, or co-located within one or more eNodeBs 210. In yet more examples, the local EPC 201 may be located just outside of the RAN domain.

In some examples, the local EPC 201 may comprise a local MME 203, which may in some examples function as a local/proxy MME. Thus, if communications link 205 (S1-MME) between MME 208 and local EPC 201 is active, which may be an S1 interface or an S5/S8 interface if general packet radio service, GPRS, tunnelling protocol (GTP) is deployed using GTP-Control, GTP-C, there may be a backhaul link available.

In the context of this invention, a backhaul link may be defined as a backhaul portion of the network, which may comprise intermediate links between the core network elements 204 and components of the RAN.

In some examples, the local MME 203 may comprise at least a subset of usual MME 208 functionality, and in some examples may be operable to build and update UE 225 context information. Further, the local MME 203 may be operable to intercept signalling between the MME 208 and eNodeBs 210. If connection 205 becomes unavailable, i.e. for example the MME 208 is no longer available or not functioning correctly, the local MME 203 may take over all or some of the operations of MME 208, and thus in some examples replace the MME 208.

If connection 205 subsequently becomes available, thereby allowing access to MME 208, the local MME 203 may trigger a tracking area update (TAU) procedure, reconnect with the MME 208, and switch to the proxy mode of operation.

Referring to local EPC 201 and local MME 203, processes are in place in some examples to allow management of interactions between MME 208 and local MME 203, and how to arrange security between UEs 225, MME 208 and local MME 203.

Further, local EPC 201 may comprise a serving gateway, for example an S-GW 206 that may be operably coupled to MME 208 via an S11 interface and operably coupled to an optional local P-GW 211, as well as local MME 203. Further, the MME 208 may be operably coupled to the local EPC 201 via an S1-MME interface. The Gateway 206 predominantly acts as a mobility anchor point and is capable of providing internet protocol (IP) distribution of user plane data to eNodeBs 210. The S-GW 206 may receive content via the P-GW 207, from one or more content providers 209 or via the external PDN 202. As the serving gateway may comprise an S-GW 206, the eNodeBs 210 would be connected to the S-GW 206 and the MME 208 directly. In this case, all UE packets would be transferred through the S-GW 206, which may serve as a local mobility anchor for the data bearers when a UE 225 moves between eNodeBs 210. The S-GW 206 may also be capable of retaining information about the bearers when the UE 225 is in an idle state (known as EPS connection management IDLE), and temporarily buffers downlink data while the MME 208 initiates paging of the UE 225 to re-establish the bearers. In addition, the S-GW 206 may perform some administrative functions in the visited network, such as collecting information for charging (i.e. the volume of data sent or received from the UE 225). The S-GW 206 may further serve as a mobility anchor for inter-working with other 3GPP™ technologies, such as GPRS™ and UMTS™.

In some example embodiments, the S-GW 206 may be controlled via the MME 208 or a local MME 211, which may also be situated within the local EPC 201.

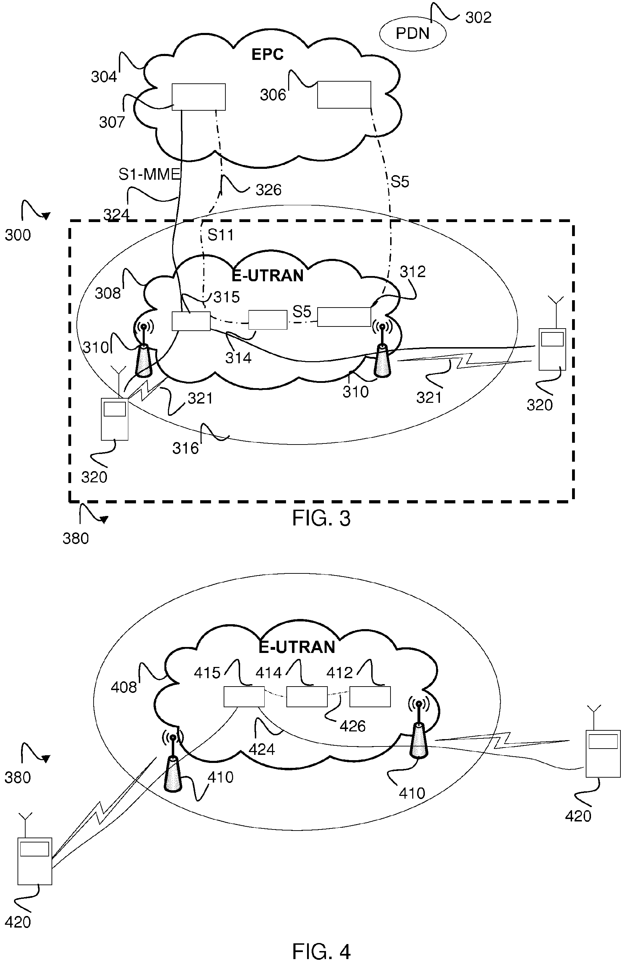

Referring to FIG. 3, a simplified wireless communications system 300 is illustrated in outline in accordance with an example embodiment of the invention. In this example, wireless communications system 300 may comprise a PDN 302, an EPC 304 comprising at least a first MME, for example main MME 307, an optional P-GW 306, and an access network 316, for example a E-UTRAN. Access network 316 may comprise at least one eNodeB 310, a second MME, for example local MME 315,an S-GW 314 and a local P-GW 312, which may define a local EPC network within the access network 316. UEs 320 may be operable to receive and transmit 321 via eNodeBs 310 and receive control plane data 324, on an S1-MME interface 324, via main MME 307 and local MME 315. The main MME 307 and local MME 315 may forward 326, via an S11 interface, control plane data to the P-GW 306, on an S5 interface, via the optional local P-GW 312 and S-GW 314. In this example, there is always at least one local MME 315 selected to support control plane data for UEs 320. However, in some examples, each UE 320 may select a different local MME from a plurality of local MMEs (not shown) within the access network 308. This may define a 'pooling' concept, wherein there may be a plurality of local MMEs in a pooling area, thereby potentially reducing any probability of failure of control plane data support within the local EPC network within the access network 308.

In this example, the main MME 307 may select local MME 315 to support one or more UEs based on its node selection function, wherein the node selection function may identify a geographically optimal local MME at a point in time when the allocation occurred, for example at the time UE 320 attaches to the wireless communications system 300. In some examples, the main MME 307 may be aware of locations of the 'pool' of local MMEs and, based on this information, the main MME 307 may invoke an EPC selection function to select an S-GW, for example S-GW 314, that may be in a geographically optimal position at the time that the UE 320 attaches to the wireless communications system 300. In some examples the local MME 315 may select an SGW 314 that may be in a geographically optimal location.

In the example of FIG. 3, main MME 307 may be operational and the wireless communications system 300 may be, say, in a 'mode A' operating state. In this state, main MME 307 may be operable to coordinate signalling via a selected local MME, for example local MME 315. During this 'mode A' operating state, local MME 315 may be operable to build and update UE 320 context information. In this example, the local MME 315 may perform a subset of the main MME's functionality. In some examples, the local MME 315 may not be operable to perform one or more of the following functions while in the 'mode A' operating state:-
- Trigger or coordinate paging;
- Manage authentication procedures;
- Handle security mode command procedures;
- Determine a target MME when relocation is required at handover;
- Invoke EPC node selection functions;
- Manage ECM-IDLE/ECM-CONNECTED transitions;
- Terminate NAS protocol or S1AP protocol.

Referring now to FIG. 4, the access network and UE 380 that is part of FIG. 3 is illustrated in accordance with some example embodiments of the invention. In this example, connection to the main MME 307 may have been lost. Therefore, there may be no backhaul link, for example an S1-MME 324 connection, between the local MME 415 within the access network 408 and the main MME 307. This case may be referred to, say, a 'mode B' operating state. In the 'mode B' operating state, the local MME 415 may become a fully functional MME and take over operations that were previously being performed by the main MME 307 prior to the local MME 415 losing connection with the main MME 307. Therefore, the local MME 415 may be operable to forward control plane data 424 to UEs 420 via eNodeBs 410. Further, in some examples, local MME 415 may be operable to forward control plane data 426 to optional local P-GW 412 via S-GW 414.

In some examples, the local MME 415 may monitor the availability of the main MME 307 and, if the main MME 307 becomes available, reconnect to the main MME 307 and relinquish part of its functionality. Therefore, there may be several scenarios as to how the local MME 415 may switch back functionality to the main MME 307, returning the wireless communications system back to the 'mode A' operating state. In some examples, the main MME 307 may be determined by a routing function that may take into account backhaul/path capability and load information.

In some examples, returning to the 'mode A' operating state after the 'mode B' operating state may have two sub scenarios. Firstly, the local MME 415 may determine that a main MME that has become available is not the same MME 307 that used to serve UEs 420, but a new entity that has not served UEs 420 before. Secondly, the local MME 415 may determine that a main MME that has become available is the same main MME 307 that used to serve UEs 420 before connectivity was lost. In both cases, the handling of connectivity between local MME 415 and main MME 307/new entity may be similar.

Referring to the first case, a standard MME context retrieval procedure or MME relocation procedure may be utilised, for example the local MME 415 that took over the main MME's 307 operations may be asked to pass UE 420 context information to the new entity. In this example, the local MME 415 may take into account the availability of the main entity. Therefore, actual main entity relocation may be triggered at a time when UEs 420 initiate a tracking area update (TAU) procedure, wherein the UE's 420 context is then requested from local MME 415 or when an S1 based handover is triggered (MME relocation function is triggered), for example.

Referring to the second case, the main MME 307 may be required to discard previous UE 420 context information before it is assigned by the TAU procedure. In both cases, routing functions at eNodeBs 410 may pass the TAU request to a local MME that is nearest the geographical region, for example local MME 415 when it is serving UEs 420. In this instance, the local MME 415 may forward the TAU request to the main MME 307, if it is available. In some examples, it may be important to ensure that any Non Access Stratum (NAS) signalling is routed via local MME 415 when the main MME 307 is available. The routing function can be used to select the local MME / main MME that is geographically nearest at the time that the UE is attaching to the system. Once attached, the routing function may not take geographical proximity criterion for routing.

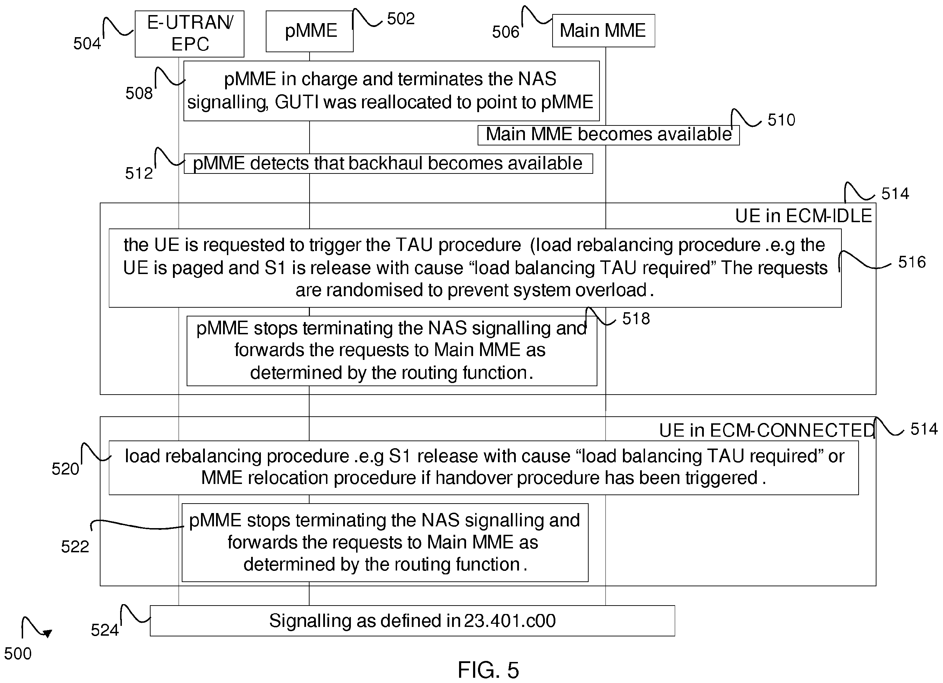

Referring to FIG. 5, a simplified example message sequence chart of an operation of a local MME, pMME, 502 switching back to a main MME 506, according to example embodiments of the invention, is illustrated 500. In this example, the main MME 506 may have been previously connected to the local MME 502 before connectivity was lost. Initially, in this example, the local MME 502 is in a 'mode B' operating state and is operable, at 508, to forward control plane signalling to relevant UE(s) in ECM-IDLE mode 514, terminate NAS signalling, and reallocate a Globally Unique Temporary Identity (GUTI) to point to the local MME 502. At 510, the main MME 506 becomes available, and is detected by local (proxy) MME 502 at 512, as the local MME 502 may detect that a backhaul link has become available. At 516, UE 514 is requested to trigger a TAU procedure, which may be a load rebalancing procedure. For example, the UE 514 may be paged and an S1 or S5/S8 interface may be released with a cause of 'load balancing TAU required'. This procedure allows the UE 514 to trigger a TAU procedure so that the local MME 502 triggers UE context transfer to the main MME 506, wherein the local MME 502 retains its context information and reverts to a proxy mode of operation. In some examples, the requests 516 may be randomised to prevent system overload. In response to this request, the local MME 502 may stop terminating NAS signalling 518 and forward the TAU request to the main MME 506 as determined, say, by a routing function. In some examples, a main MME 506 may be determined by the routing function, which may take into account backhaul/path availability and load information and, therefore, the UE may be said to be in an EPS connection management idle state (ECM-IDLE). In another example, the UE may be in an ECM-CONNECTED state, in which case the local MME 502 may trigger an optional MME relocation procedure, if for example a handover procedure has been triggered 520. This operation may be employed if an immediate relocation procedure is required. Otherwise, the local MME 502 may wait until UE 514 has transitioned back to an ECM-IDLE state in order to avoid any disruption to user plane data transfer. In response to this procedure, the local MME 502 may terminate NAS signalling and forward requests to the main MME 506 as determined by the routing function 522. At 524, signalling as defined in 3GPP™ TS 23.401.c00 may be performed.

In order to be able to switch between local MME 502 and main MME 506, both local MME 502 and main MME 506 the UE needs to be registered with both. Therefore, a dual registration may be required wherein UE context information is stored at both the local MME 502 memory (not shown) and memory in the main MME 506. In one example, only a single registration may be performed, with the registration details or registration grant of registration request being passed between local MME 502 and main MME 506.

A potential problem may be how to arrange security protocols between UE 514 and MMEs 502/506.

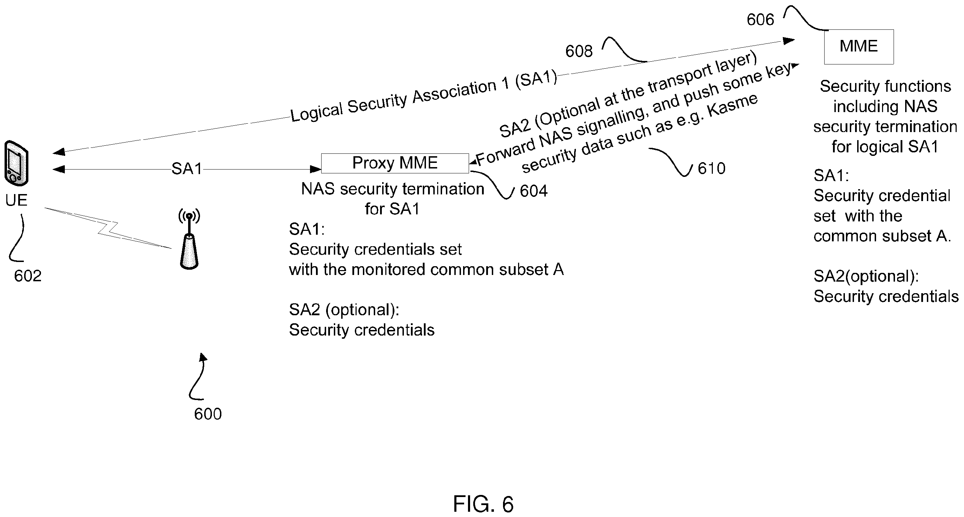

Referring now to FIG. 6, a simplified example of a NAS security termination and handling operation 600 is illustrated. In this example, dual registration of a single UE 602 using the same security credentials may be performed, albeit that is some examples this may require dual security associations. Therefore, in this example, local MME 604 may act as a proxy MME. Thus, the same security credentials may be utilised between the UE 602, proxy MME 604 and MME 606. This is possible because the main MME 606 may supply the proxy MME 604 with security key K_{ASME}, thereby allowing the proxy MME 604 to generate relevant credentials from this key. In another example, the MME 606 may supply the proxy MME 604 with the entire authentication vector comprising RAND, K_{ASME}, XRES and AUTN. In this example, UE 602 may determine that it is communicating directly with MME 606, and not determine that proxy MME 604 is located in the communication path. This is represented by logical security association 1 (SA1) 608. However, MME 606 is aware that proxy MME 604 is in the communication path as it may supply 610, at least, the relevant K_{ASME} to the proxy MME 604. After receiving K_{ASME} from MME 606, along with optional forwarded NAS signalling, the proxy MME 604 may derive K_{NAS}enc and K_{NAS}int. These derived keys are the same as those derived by MME 606 since both entities are using the same K_{ASME}. By deriving these keys, the proxy MME 604 may be operable to decipher and perform an integrity check of NAS messages supplied by MME 606 and/or UE 602. Therefore, the proxy MME 604 may be operable to scan any NAS and store relevant information. In this example, NAS security may be pseudo-terminated at the proxy MME 604, as the proxy MME 604 is able to decipher and perform integrity check on messages. Therefore, the proxy MME 604 may have access to the clear content of the signalling messages. However, security functions may still be performed by MME 606, as any encrypted/integrity protected messages are still forwarded to the MME 606. Any security credentials received by the MME 606 from a relevant authentication centre (AuC) or home subscriber server (HSS) are forwarded to the proxy MME 604 to enable it to decipher NAS messages. Further, the MME 606 performs security functions, and the proxy MME 604 is operable to passively build and store security context information from messages sent between UE 602 and MME 606.

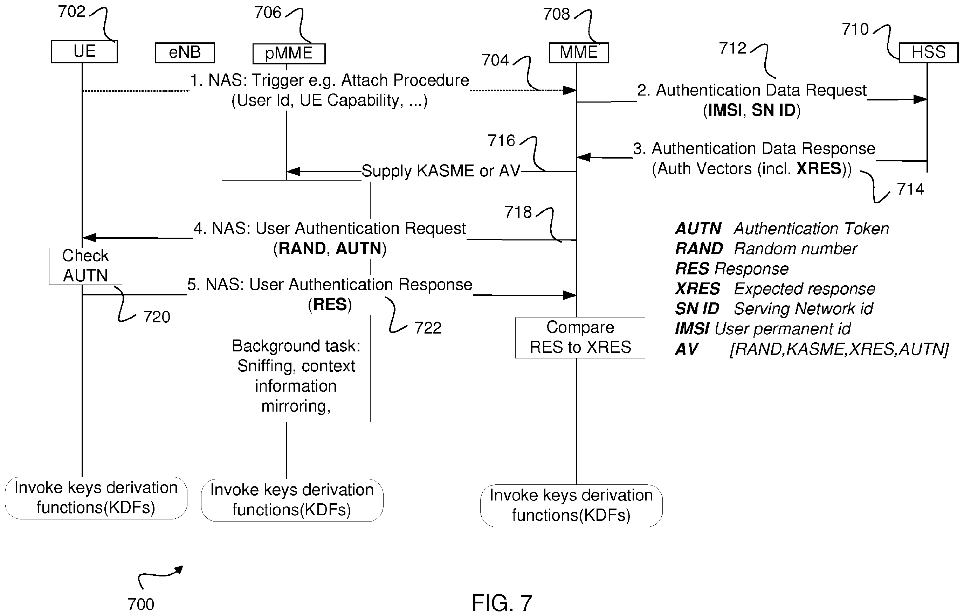

Referring now to FIG. 7, a simplified message sequence chart 700 illustrating security aspects in a wireless communications system is shown. Initially, UE 702 initiates an attach procedure 704, which is relayed by local, proxy MME 706 to main MME 708. In some examples, the proxy MME 706 may build and store information relating to UE 702. MME 708 may request an authentication 712 of UE 702 from HSS 710, which may subsequently return an authentication response 714 comprising an authentication vector. In this example, the authentication vector may comprise at least RAND, K_{ASME}, XRES and AUTN. MME 708 may subsequently forward 716 a copy of K_{ASME} and/or authentication vector (AV) to proxy MME 706. As a result, the proxy MME 706 may be operable to derive further security credentials, such as K_{NAS}enc and K_{NAS}int in order to enable it to inspect subsequently transmitted NAS messages between UE 702 and MME 708. After forwarding 716 at least a copy of K_{ASME} to proxy MME 706, the MME 708 may subsequently transmit a user authentication request NAS message 718 to UE 702, via proxy MME 706. In response to this message, after checking an authentication token of the message 720, the UE 702 may transmit a user authentication response NAS message 722 to main MME 708 via proxy MME 706. During this procedure, proxy MME 706 may be operable to, as a background task, 'sniff' information that it relays as well as perform context information mirroring.

The above mentioned description of FIG. 7 relates to a 'mode A' operating state, wherein there is also a backhaul link between MME 708 and proxy MME 706.

However, a 'mode B' operating state, wherein there is no longer a backhaul link between proxy MME 706 and MME 708, it is likely that access to HSS 710 may also be impacted. Therefore, in the 'mode B' operating state, where the proxy MME 706 performs at least a number of the operations of main MME 708, the proxy MME 706 may not trigger periodic authentication unless there is local access to HSS 710. In another example, while there is a backhaul link available, an authentication procedure may be run periodically at shorter time intervals, for example to reset NAS COUNT values for uplink and downlink information. Therefore, if the HSS becomes unavailable, the NAS COUNT must be kept away from a wrap-around level.

If the NAS COUNT is close to a wrap-around value, this may require the authentication procedure to be triggered in order to allow UE 702 to keep using system resources. Therefore, authentication data needs to be updated regularly and be made available locally for the authentication procedure to succeed when there is no backhaul link available in the 'mode B' operating state. During the 'mode B' operating state, the access stratum security needs to be established by the proxy MME 706, which may occur each time UE 702 makes a transition to ECM-CONNECTED mode.

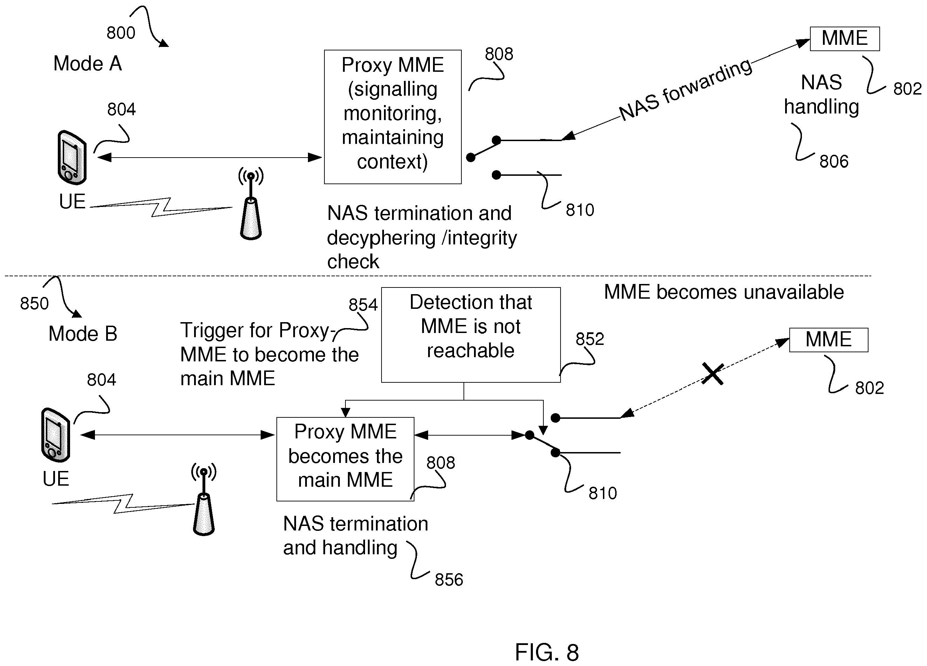

Referring to FIG. 8, a simplified example of a switching operation of a proxy MME is illustrated. In an example of a 'mode A' operating state 800, main MME 802 tracks a UE's 804 location and handles NAS signalling 806. Proxy MME 808 terminates the NAS protocol and forwards all NAS signalling to main MME 802. During this operation, the proxy MME 808 may inspect, for example sniff the content of NAS messages that it forwards between UE 804 and main MME 802. The inspection (sniffing) of NAS messages may allow the proxy MME 808 to build up UE 804 context information, which may mirror information stored at main MME 802. For example, NAS ESM (EPS session management) messages may be utilised to populate bearer/PDN information in UE's 804 context and, for example, NAS security Mode Commands may be used in order to gain knowledge about security algorithms chosen for integrity protection and ciphering or the NAS authentication procedure in order to use the pre-provisioned data by MME 802, for example in order to generate K_{NAS}enc and K_{NAS}int. In some examples, the proxy MME 808 may also inspect GTP-C messages at an S11 interface and S1AP messages at an S1-MME interface in order to facilitate the process of building UE 804 context information. In the 'mode A' operating state, switch 810 is in a first position, which operably couples main MME 802 to proxy MME 808. Therefore, the proxy MME 808 terminates the NAS messages. In this mode of operation the proxy MME 808 does not handle NAS messages, it may only forward them onto main MME 802. Further, location tracking of UE 804 is performed by main MME 802 in this example.

In a 'mode B' operating state 850, for example when main MME 802 becomes unavailable, proxy MME 808 may assume the role of main MME 802. Therefore, the proxy MME 808 may terminate and handle NAS protocol messages and track UE's 804 location.

Further, proxy MME 808 may detect 852 that main MME 802 is not available, which may in one example trigger 854 the proxy MME 808 to assume the role and functionality of MME 802. Therefore, switch 810 may transition to a second position, and proxy MME 808 may track UE's 804 location and terminate and handle NAS signalling 856 without forwarding it to main MME 802, as it is currently unavailable. In this example, as the proxy MME 808 is operable to monitor and maintain context information of NAS signalling messages during the 'mode A' operating state, and maintain a copy of key context information forwarded to it by main MME 802, the proxy MME 808 may be capable of taking over main MME 802 functionality. In this example, all context information from NAS signalling as forwarded by the proxy MME 808 during the 'mode A' operating state, may be mirrored in the proxy MME 808.

Further, input parameters to security functions, such as K_{ASME}, RAND, AUTN may also be mirrored in proxy MME 808. As discussed previously, the proxy MME 808 may switch to a 'mode B' operating state when it detects that main MME 802 is unavailable. In some examples, the proxy MME 808 may detect that the main MME 802 is unavailable, for example, using a detection process facilitated by mechanisms supported in a stream control transmission protocol (SCTP). Therefore, the proxy MME 808 may stop forwarding NAS messages and may become a termination point for the NAS protocol messages. Link failure detection processes may be defined by the SCTP protocol or GTP protocol or by other means, for example any suitable layer 1 or layer 2 mechanisms to supervise the link, if the GTP protocol is used, an S-GW will need to notify proxy MME 808.

In some examples, it may be required to re-allocate the proxy MME 808. Some examples of relocation of MMEs, including proxy MME 808 and main MME 802, will be discussed later.

In some further examples, if main MME 802 is not available, the proxy MME 808 may be operable to handle possible S-GW relocations from within the local EPC.

Further, in some examples, a change of S-GW or MME may trigger a proxy MME 808 relocation procedure.

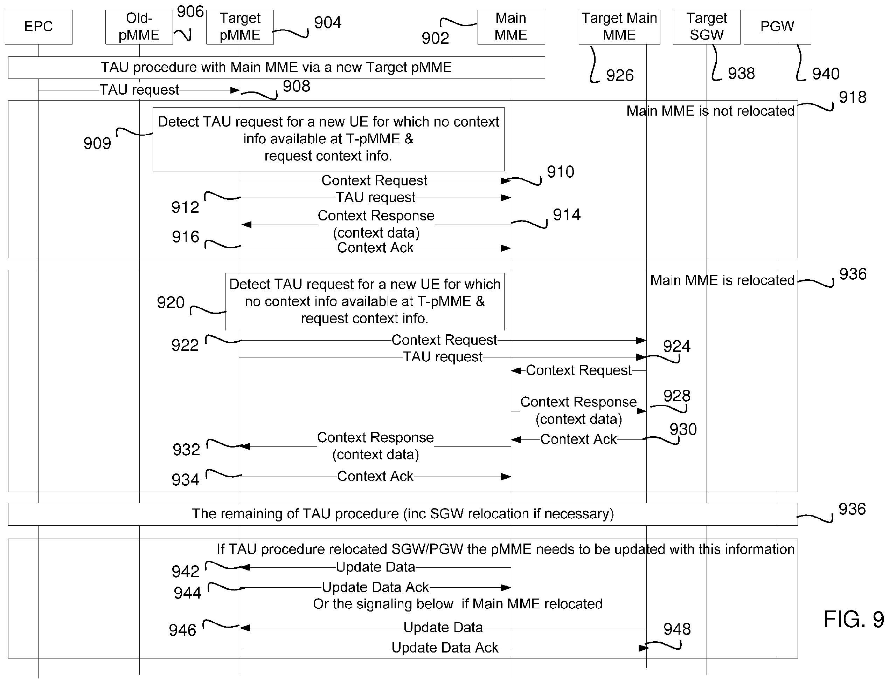

Referring to FIG. 9, a simplified message sequence chart of an example method of managing MMEs as a UE moves within a RAN network is illustrated. Initially, a tracking area update (TAU) procedure may take place between a main MME 902 and a target proxy MME 904. In this example, the main MME 902 may still be in control, but an old proxy MME 906 may need to be relocated as it may be closer to an edge of its associated network. Therefore, an initial TAU request 908 may be initiated by a UE, which is forwarded to target proxy MME 904. The target proxy MME 904 may have been identified from a pool of available proxy MMEs, for example by a routing function that may take into account backhaul/path availability and load information. The target proxy MME 904 may detect the TAU request 908 for the new UE, which may not have any context information available 909. Therefore, the target proxy MME 904 may initiate a context information request message 910 and forward 912 the TAU request on to main MME 902. Main MME 902 may then transmit context data in a context response message 914 to target proxy MME 904, wherein the target proxy MME 904 may then transmit a context acknowledge message 916 back to the main MME 902. In this example, the main MME 902 is not relocated 918 as it may be determined that main MME 902 is geographically nearest to the UE submitting the TAU request 908.

In another example, target proxy MME 904 may detect the TAU request 98 from the new UE, which may not have any context information available 1020. Therefore, the target proxy MME 904 may initiate a context information request message 922 and forward 924 the TAU request on to a target main MME 926. In this example, it may be determined by a routing function that main MME 902 is not suitable. This may be because main MME 902 is not available, not geographically close, or there is no backhaul/path availability. Therefore, in this example, a target MME 926 may be determined by the routing function, wherein the main MME 902 may be operable to forward context request message 922 and TAU request message 924 onto target main MME 926.

In response to these messages, target main MME 926 may be operable to transmit context data within a context response 928 and a context acknowledge message 930 to main MME 902, wherein main MME 902 is operable to forward 932 the context response message to target proxy MME 904. At 934, the target proxy MME 904 may transmit a context acknowledge message 934 to main MME 902. In this example, the main MME 902 is relocated 936 as it may be determined by the routing function that target main MME 926 is more suitable that main MME 902. The routing function may make this determination based on backhaul/path availability and load information. In examples where the main MME 902 is not relocated 918 or where the main MME 902 is relocated 936, the remainder of the TAU procedure, including any necessary S-GW relocation may follow 938. If during the TAU procedure a target S-GW 938 or P-GW 940 is relocated, the target proxy MME 904 may need to be updated with this information. In this case, the main MME 902 is not relocated and, therefore, the main MME 902 transmits update data 942, which may comprise details of target S-GW 938 and P-GW 940. In response to this message, target proxy MME 904 may transmit an update data acknowledge message 944. In some examples, where the main MME 902 is relocated 936, update data messages 942 and 944 may be transmitted between target proxy MME 904 and main MME 902, or between target main MME 926 as messages 946 and 948 respectively. In some examples, target main MME 926 may have been chosen from a pool of available MMEs.

In some examples, where there is a backhaul link available between at least main MME/target MME 902/926 and old proxy MME/target proxy MME 906/904, an orphaned context decision may be implemented. If no signalling has been detected from a UE for a predetermined amount of time, the context may be marked for deletion. In some examples, if there is no further activity for a predetermined amount of time, UEs marked for deletion may be removed silently. In some examples, if there is not a backhaul link available, the orphaned context detection operation may be deactivated or modified subject to operator configuration.

In some examples, after successful completion of the TAU procedure with the old proxy MME 906 relocation, the main MME target MME 902/926 may request the UE context to be deleted from the old proxy MME 906.

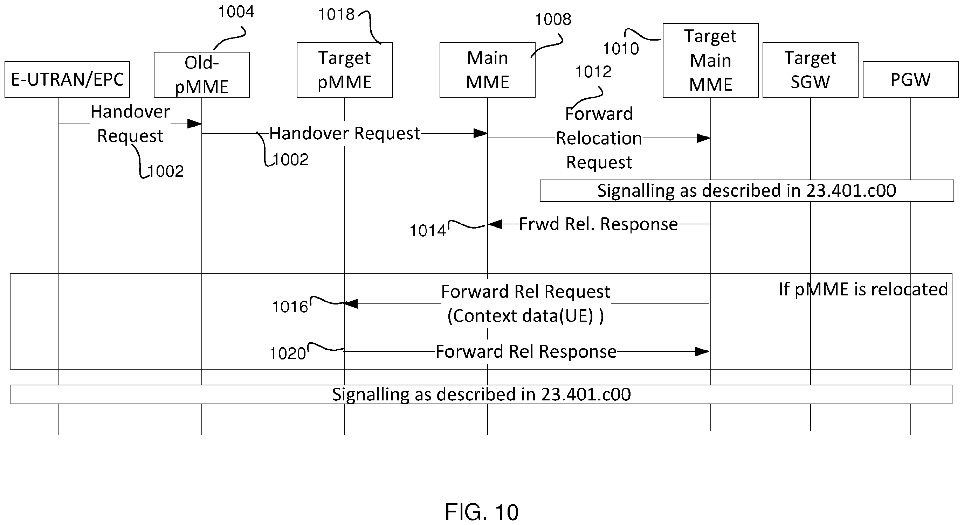

Referring to FIG. 10, a simplified message sequence chart of an example method of handover and proxy MME relocation is illustrated. Initially, a handover request message 1002 may be transmitted to an old proxy MME 1004, which may be operable to forward the handover request message 1002 to main MME 1008. Main MME 1008 may determine that it needs to handover to a new target MME 1010 and, therefore, main MME 1008 may forward a relocation request message 1012 to a target main MME 1010. In response to this message, target main MME 1010 may forward a relocation response message 1014 to main MME 1008. In some examples, if an old proxy MME 1004 is to be relocated, a relocation request message, including UE context data, 1016 may be forwarded from target main MME 1010 to target proxy MME 1018. In response to this, target proxy MME 1018 may forward 1020 a relocation response message to target main MME 1010.

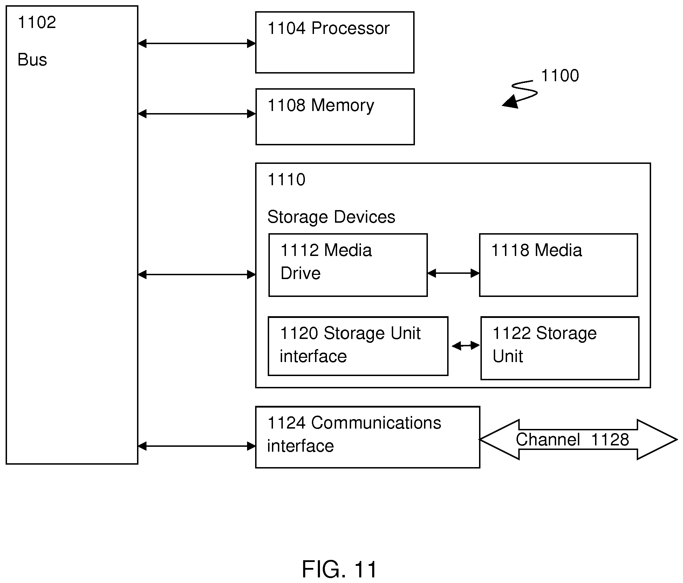

Referring now to FIG. 11, there is illustrated a typical computing system 1100 that may be employed to implement software controlled support of control plane data with a terminal device using a first mobility management entity, MME, and at least one second mobility management entity, MME, for example encompassing switching between a first mode of operation where a backhaul link may be available and a second mode of operation where a backhaul link may not be available, in some example embodiments of the invention. Computing systems of this type may be used in wireless communication units, such as MMEs illustrated within this application. In one example, the software control, when executed at the (at least one second) proxy MME, terminates received Non-Access Stratum, NAS, protocol messages from a terminal device when the first MME and the at least one second MME are operably coupled and operational; and forwards all NAS signalling to the first MME.

Those skilled in the relevant art will also recognize how to implement the invention using other computer systems or architectures. Computing system 1100 may represent, for example, a desktop, laptop or notebook computer, hand-held computing device (PDA, cell phone, palmtop, etc.), mainframe, server, client, or any other type of special or general purpose computing device as may be desirable or appropriate for a given application or environment. Computing system 1100 can include one or more processors, such as a processor 1104. Processor 1104 can be implemented using a general or special-purpose processing engine such as, for example, a microprocessor, microcontroller or other control logic. In this example, processor 1104 is connected to a bus 1102 or other communications medium.

Computing system 1100 can also include a main memory 1108, such as random access memory (RAM) or other dynamic memory, for storing information and instructions to be executed by processor 1104. Main memory 1108 also may be used for storing temporary variables or other intermediate information during execution of instructions to be executed by processor 1104. Computing system 1100 may likewise include a read only memory (ROM) or other static storage device coupled to bus 1102 for storing static information and instructions for processor 1104.

The computing system 1100 may also include information storage system 1110, which may include, for example, a media drive 1112 and a removable storage interface 1120. The media drive 1112 may include a drive or other mechanism to support fixed or removable storage media, such as a hard disk drive, a floppy disk drive, a magnetic tape drive, an optical disk drive, a compact disc (CD) or digital video drive (DVD) read or write drive (R or RW), or other removable or fixed media drive. Storage media 1118 may include, for example, a hard disk, floppy disk, magnetic tape, optical disk, CD or DVD, or other fixed or removable medium that is read by and written to by media drive 1112. As these examples illustrate, the storage media 1318 may include a computer-readable storage medium having particular computer software or data stored therein.

In alternative embodiments, information storage system 1110 may include other similar components for allowing computer programs or other instructions or data to be loaded into computing system 1100. Such components may include, for example, a removable storage unit 1122 and an interface 1120, such as a program cartridge and cartridge interface, a removable memory (for example, a flash memory or other removable memory module) and memory slot, and other removable storage units 1122 and interfaces 1120 that allow software and data to be transferred from the removable storage unit 1118 to computing system 1100.

Computing system 1100 can also include a communications interface 1124. Communications interface 1124 can be used to allow software and data to be transferred between computing system 1100 and external devices. Examples of communications interface 1124 can include a modem, a network interface (such as an Ethernet or other NIC card), a communications port (such as for example, a universal serial bus (USB) port), a PCMCIA slot and card, etc. Software and data transferred via communications interface 1124 are in the form of signals which can be electronic, electromagnetic, and optical or other signals capable of being received by communications interface 1124. These signals are provided to communications interface 1124 via a channel 1128. This channel 1128 may carry signals and may be implemented using a wireless medium, wire or cable, fiber optics, or other communications medium. Some examples of a channel include a phone line, a cellular phone link, an RF link, a network interface, a local or wide area network, and other communications channels.

In this document, the terms 'computer program product', 'computer-readable medium' and the like may be used generally to refer to media such as, for example, memory 1108, storage device 1118, or storage unit 1122. These and other forms of computer-readable media may store one or more instructions for use by processor 1104, to cause the processor to perform specified operations. Such instructions, generally referred to as 'computer program code' (which may be grouped in the form of computer programs or other groupings), when executed, enable the computing system 1100 to perform functions of embodiments of the present invention. Note that the code may directly cause the processor to perform specified operations, be compiled to do so, and/or be combined with other software, hardware, and/or firmware elements (e.g., libraries for performing standard functions) to do so.

In an embodiment where the elements are implemented using software, the software may be stored in a computer-readable medium and loaded into computing system 1100 using, for example, removable storage drive 1122, drive 1112 or communications interface 1124. The control logic (in this example, software instructions or computer program code), when executed by the processor 1104, causes the processor 1104 to perform the functions of the invention as described herein.

In one example, a tangible non-transitory computer program product comprises executable program code operable for, supporting control plane data with a terminal device using a first mobility management entity, MME, and at least one second mobility management entity, MME, for example encompassing switching between a first mode of operation where a backhaul link may be available and a second mode of operation where a backhaul link may not be available, in some example embodiments of the invention. In one example, the program code may be operable for, when executed at the (at least one second) proxy MME, terminating received Non-Access Stratum, NAS, protocol messages from a terminal device when the first MME and the at least one second MME are operably coupled and operational; and forwarding all NAS signalling to the first MME.

It will be further appreciated that, for clarity purposes, the described embodiments of the invention with reference to different functional units and processors may be modified or re-configured with any suitable distribution of functionality between different functional units or processors is possible, without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Aspects of the invention may be implemented in any suitable form including hardware, software, firmware or any combination of these. The invention may optionally be implemented, at least partly, as computer software running on one or more data processors and/or digital signal processors. For example, the software may reside on non-transitory computer program product comprising executable program code to increase coverage in a wireless communication system.

Thus, the elements and components of an embodiment of the invention may be physically, functionally and logically implemented in any suitable way. Indeed, the functionality may be implemented in a single unit, in a plurality of units or as part of other functional units.

Those skilled in the art will recognize that the functional blocks and/or logic elements herein described may be implemented in an integrated circuit for incorporation into one or more of the communication units. Furthermore, it is intended that boundaries between logic blocks are merely illustrative and that alternative embodiments may merge logic blocks or circuit elements or impose an alternate composition of functionality upon various logic blocks or circuit elements. It is further intended that the architectures depicted herein are merely exemplary, and that in fact many other architectures can be implemented that achieve the same functionality.

Although the present invention has been described in connection with some example embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term 'comprising' does not exclude the presence of other elements or steps.

Furthermore, although individually listed, a plurality of means, elements or method steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather indicates that the feature is equally applicable to other claim categories, as appropriate.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality.

## Claims

1. A wireless communications system (500) supporting control plane data comprising:
a terminal device (514);
a first mobility management entity, MME, (506) configured to support control plane data for the terminal device; and
at least one second mobility management entity, MME, (502) operably coupled via a backhaul link to the first MME (506)
wherein, according to a first mode of operation, a processor of the at least one second MME (502) is arranged to build and update context information associated with the terminal device by monitoring at least a subset of the control plane data between the terminal device and the first MME (506), following a receipt of a security key, K_{ASME}, or a whole authentication vector from the first MME (506), such that the at least one second MME (502) is able to use the same security association between the terminal device and the first MME (506);
wherein the processor of the at least one second MME (502) is further arranged to detect either a communication link failure between the at least one second MME (502) and the first MME (506) via the backhaul link or that the first MME is deemed non-operational, and in response thereto switch to a second mode of operation;
where the at least one second MME (502) is arranged to perform at least a subset of the MME functionality of the first MME (506) .

2. The wireless communications system of Claim 1 wherein perform at least a subset of the MME functionality of the first MME (506) comprises the processor being arranged to perform at least one of:
forward control plane signalling to relevant terminal devices in ECM-IDLE mode;
reallocate a Globally Unique Temporary Identity (GUTI) to point to the second MME (502);
terminate received Non-Access Stratum, NAS, protocol messages.

3. The wireless communications system of any preceding Claim wherein the terminal device is arranged to perform dual registration to both the first MME (506) and the at least one second MME (502) by issuing a single registration request that results in context information of the terminal device being kept at both the first MME (506) and the at least one second MME (502).

4. The wireless communications system of any preceding Claim wherein the processor is operably coupled to a memory element arranged to store the terminal device context information.

5. The wireless communications system of Claim 2 wherein the at least one second MME (502) processor is arranged to perform at least one of:
both terminate and handle: NAS protocol messages, S1AP protocol messages and general packet radio service, GPRS, tunnelling protocol control, GTP-c, messages via a S11 interface
track the terminal device mobility in an evolved packet system connection management, ECM, idle mode and arrange a S1 handover in ECM connected mode of the terminal device;
invoke one or more core network node selection functions that operably re-couples to the first MME (506) when a connection thereto becomes operational;
triggers the terminal device to initiate a tracking area update, TAU, process to cause the terminal device context information at the at least one second MME (502) to be transferred to the first MME (506), and the at least one second MME (502) reverts to a proxy mode of operation.

6. A proxy mobility management entity, MME, (502) located in a wireless communications system that comprises an additional first MME wherein the first MME is operational and operably coupled to the proxy MME (502) via a backhaul link; the proxy MME (502) **characterised by** a processor arranged to:
build and update context information associated with the terminal device;
receive a security key, K_{ASME}, or a whole authentication vector from the first MME (506), such that the at least one proxy MME (502) is able to use the same security association between the terminal device and the first MME (506);
monitor at least a subset of the control plane data between the terminal device and the first MME (506), ;
detect **either** a communication link failure between the at least one proxy MME (502) and the first MME (506) **via the backhaul link or that the first MME is deemed non-operational,** and in response thereto switch to a second mode of operation; where the proxy MME (502) performs at least a subset of the MME functionality of the first MME (506).

7. The proxy MME (502) of Claim 6 wherein the processor of the proxy MME (502) is further arranged to perform at least one of:
forward control plane signalling to relevant terminal devices in ECM-IDLE mode;
reallocate a Globally Unique Temporary Identity (GUTI) to point to the proxy MME (502);
terminate and handle received Non-Access Stratum, NAS, protocol messages.

8. A method of operation of a wireless communications system comprising a terminal device, a first mobility management entity, MME, (506) and a proxy mobility management entity, MME (502) such that both MMEs (502, 506) are configured to support control plane data for the terminal device; the method **characterised by**, at the proxy MME (502):
building and updating context information associated with the terminal device;
receiving a security key, K_{ASME}, or a whole authentication vector from the first MME (506), such that the at least one proxy MME (502) is able to use the same security association between the terminal device and the first MME (506);
monitoring at least a subset of the control plane data between the terminal device and the first MME (506);
detecting either a communication link failure between the at least one proxy MME (502) and the first MME (506) via the backhaul link or that the first MME is deemed non-operational, and in response thereto switch to a second mode of operation; and
in response thereto, performing at least a subset of the MME functionality of the first MME (506).

9. A non-transitory computer program product comprising executable program code for a wireless communications system supporting control plane data with a terminal device using a first mobility management entity, MME, (506) and a proxy mobility management entity, MME, (502) the executable program code operable for, when executed at the proxy MME (502), performing the method of Claim 8.

## Patentansprüche

1. Drahtloses Kommunikationssystem (500), welches Steuerebenendaten unterstützt, umfassend:
ein Endgerät (514);
eine erste Mobilitätsmanagementeinheit ("mobility management entity" (MME)) (506), die eingerichtet ist, um Steuerebenendaten für das Endgerät zu unterstützen; und
wenigstens eine zweite Mobilitätsmanagementeinheit MME (502), die betriebsfähig über eine Backhaul-Verbindung mit der ersten MME (506) gekoppelt ist, wobei, gemäß einer ersten Betriebsart, ein Prozessor der wenigstens einen zweiten MME (502) eingerichtet ist, um Kontextinformation aufzubauen und zu aktualisieren, assoziiert mit dem Endgerät, durch Überwachen wenigstens einer Teilmenge der Steuerebenendaten zwischen dem Endgerät und der ersten MME (506), auf einen Empfang eines Sicherheitsschlüssels (K_{ASME}) oder eines ganzen Authentifizierungsvektors von der ersten MME (506), so dass die wenigstens eine zweite MME (502) in der Lage ist, dieselbe Sicherheitsassoziierung zwischen dem Endgerät und der ersten MME (506) zu nutzen;
wobei der Prozessor der wenigstens einen zweiten MME (502) weiterhin eingerichtet ist, entweder einen Kommunikationsverbindungsfehler zwischen der wenigstens einen zweiten MME (502) und der ersten MME (506) über die Backhaul-Verbindung zu erfassen oder dass die erste MME als unbetrieben gilt, und in Reaktion darauf, zum Umschalten auf eine zweite Betriebsart;
wobei die wenigstens eine zweite MME (502) eingerichtet ist, um wenigstens eine Teilmenge der MME-Funktionalität der ersten MME (506) auszuführen.

2. Drahtloses Kommunikationssystem nach Anspruch 1, wobei das Ausführen wenigstens einer Teilmenge der MME-Funktionalität der ersten MME (506) umfasst, dass der Prozessor eingerichtet ist, um wenigstens eines von folgendem auszuführen:
Weiterleiten einer Steuerebenensignalisierung an relevante Endgeräte in einem ECM-IDLE-Modus;
Neuzuordnen einer "Globally Unique Temporary Identity" (GUTI), um auf die zweite MME (502) zu zeigen;
Beenden empfangener NAS-Protokollnachrichten ("Non-Access Stratum").

3. Drahtloses Kommunikationssystem nach einem der vorhergehenden Ansprüche, wobei das Endgerät eingerichtet ist, um eine duale Registrierung bezüglich der ersten MME (506) und der wenigstens einen zweiten MME (502) auszuführen, indem eine einzige Registrierungsanfrage ausgegeben wird, die zu Kontextinformation des Endgeräts führt, gehalten von sowohl der ersten MME (506) als auch der wenigstens einen zweiten MME (502).

4. Drahtloses Kommunikationssystem nach einem der vorhergehenden Ansprüche, wobei der Prozessor betriebsfähig mit einem Speicherelement gekoppelt ist, das eingerichtet ist, um die Endgerätkontextinformation zu speichern.

5. Drahtloses Kommunikationssystem nach Anspruch 2, wobei der Prozessor der wenigstens einen zweiten MME (502) eingerichtet ist, um wenigstens eines von folgendem auszuführen:
sowohl Beenden als auch Handhaben von: NAS-Protokollnachrichten, S1AP-Ptorokollnachrichten und einer GPRS-Tunnelprotokollsteuerung ("general packet radio service"), GTP-c, Nachrichten über eine S11-Schnittstelle,
Verfolgen der Endgerätmobilität in einer ECM-Leerlaufbetriebsart ("evolved packet system connection management") und Einrichten einer S1-Übergabe in einer ECM-Verbindungsbetriebsart des Endgeräts;
Aufrufen einer oder mehrerer Kernnetzwerkknotenauswahlfunktionen, die betriebsfähig eine Neukopplung mit der ersten MME (506) ausführen, wenn eine Verbindung zu dieser in Betrieb tritt;
Auslösen, dass das Endgerät einen TAU-Prozess ("tracking area update") initiiert, um zu veranlassen, dass die Endgerätkontextinformation an der wenigstens einen zweiten MME (502) zu der ersten MME (506) überführt wird, wobei die wenigstens eine zweite MME (502) zu einer Proxy-Betriebsart zurückkehrt.

6. Proxy-Mobilitätsmanagementeinheit ("mobility management entity" (MME)) (502), die in einem drahtlosen Kommunikationssystem angeordnet ist, das eine zusätzliche erste MME umfasst, wobei die erste MME in Betrieb ist und betriebsfähig mit der Proxy-MME (502) über eine Backhaul-Verbindung gekoppelt ist; wobei die Proxy-MME (502) durch einen Prozessor gekennzeichnet ist, der eingerichtet ist zum:
Aufbauen und Aktualisieren von Kontextinformation, die mit dem Endgerät assoziiert ist;
Empfangen eines Sicherheitsschlüssels K_{ASME} oder eines ganzen Authentifizierungsvektors von der ersten MME (506), so dass die wenigstens eine Proxy-MME (502) in der Lage ist, dieselbe Sicherheitsassoziierung zwischen dem Endgerät und der ersten MME (506) zu nutzen;
Überwachen wenigstens einer Teilmenge der Steuerebenendaten zwischen dem Endgerät und der ersten MME (506);
Erfassen entweder eines Kommunikationsverbindungsfehlers zwischen der wenigstens einen Proxy-MME (502) und der ersten MME (506) über die Backhaul-Verbindung oder dass die erste MME (506) als unbetrieben gilt, und, in Reaktion darauf, Schalten in eine zweite Betriebsart; wobei die Proxy-MME (502) wenigstens eine Teilmenge der MME-Funktionalität der ersten MME (506) ausführt.

7. Proxy-MME (502) nach Anspruch 6, wobei der Prozessor der Proxy-MME (502) weiterhin eingerichtet ist, um wenigstens eines von folgendem auszuführen:
Weiterleiten einer Steuerebenensignalisierung an relevante Endgeräte in einem ECM-IDLE-Modus;
Neuzuordnen einer "Globally Unique Temporary Identity" (GUTI), um auf die Proxy-MME (502) zu zeigen;
Beenden und Handhaben empfangener NAS-Protokollnachrichten ("Non-Access Stratum").

8. Verfahren zum Betreiben eines drahtlosen Kommunikationssystems, das ein Endgerät, eine erste Mobilitätsmanagementeinheit ("mobility management entity" (MME)) (506) und eine Proxy-Mobilitätsmanagementeinheit (MME) (502) umfasst, so dass beide MMEs (502, 506) konfiguriert sind, um Steuerebenendaten für das Endgerät zu unterstützen;
wobei das Verfahren an der Proxy-MME (502) **gekennzeichnet ist durch**:
Aufbauen und Aktualisieren von Kontextinformation, die mit dem Endgerät assoziiert ist;
Empfangen eines Sicherheitsschlüssels K_{ASME} oder eines ganzen Authentifizierungsvektors von der ersten MME (506), so dass die wenigstens eine Proxy-MME (502) in der Lage ist, dieselbe Sicherheitsassoziierung zwischen dem Endgerät und der ersten MME (506) zu nutzen;
Überwachen wenigstens einer Teilmenge der Steuerebenendaten zwischen dem Endgerät und der ersten MME (506);
Erfassen entweder eines Kommunikationsverbindungsfehlers zwischen der wenigstens einen Proxy-MME (502) und der ersten MME (506) über die Backhaul-Verbindung oder dass die erste MME als unbetrieben gilt, und, in Reaktion darauf, Schalten in eine zweite Betriebsart; und
in Reaktion darauf, Ausführen wenigstens einer Teilmenge der MME-Funktionalität der ersten MME (506).

9. Nichttransitorisches Computerprogrammprodukt, das einen ausführbaren Programmcode für ein drahtloses Kommunikationssystem umfasst, welches Steuerebenendaten mit einem Endgerät unter Nutzung einer ersten Mobilitätsmanagementeinheit ("mobility management entity" (MME)) (506) und einer Proxy-Mobilitätsmanagementeinheit (MME) (502) umfasst, wobei der ausführbare Programmcode betreibbar ist, um, wenn er an der Proxy-MME (502) ausgeführt wird, das Verfahren nach Anspruch 8 auszuführen.

## Revendications

1. Système de communication sans fil (500) supportant des données de plan de contrôle comprenant :
un dispositif terminal (514) ;
une première entité de gestion de mobilité, MME (506) conçue pour support des données de plan de contrôle pour le dispositif terminal ; et
au moins une deuxième gestion de mobilité, MME (502) couplée de manière opérationnelle via une liaison de connexion à la première MME (506),
dans lequel, en fonction d'un premier mode de fonctionnement, un processeur de l'au moins une deuxième MME (502) est conçu pour construire et actualiser des informations contextuelles associées au dispositif terminal en surveillant au moins un sous-ensemble de données de plan de contrôle entre le dispositif terminal et la première MME (506), en suivant une recette d'une clé de sécurité, K_{ASME}, ou un vecteur d'identification complet provenant de la première MME (506), de façon à ce que l'au moins une deuxième MME (502) soit capable d'utiliser la même association de sécurité entre le dispositif terminal et la première MME (506) ;
dans lequel le processeur de l'au moins une deuxième MME (502) est en outre conçu pour détecter soit une défaillance de liaison de communication entre l'au moins une deuxième MME (502) et la première MME (506) via la liaison de connexion soit que la première MME est considérée comme non opérationnelle et, en réponse à cela commuter vers un deuxième mode de fonctionnement ;
l'au moins une deuxième MME (502) étant conçue pour effectuer au moins un sous-ensemble de fonctionnalités MME de la première MME (506).

2. Système de communication sans fil selon la revendication 1 dans lequel la réalisation d'au moins un sous-ensemble de fonctionnalités MME de la première MME (506) comprend le fait que le processeur est conçu pour effectuer au moins une tâche parmi :
la signalisation du plan de contrôle vers l'avant à des dispositifs terminaux appropriés en mode ECM-IDLE ;
la réallocation d'une Globally Unique Temporary Identity (GUTI) qui pointe vers la deuxième MME (502) ;
la terminaison de messages de protocole Non-Access Stratum, NAS, reçus.

3. Système de communication sans fil selon l'une des revendications précédentes dans lequel le dispositif terminal est conçu pour effectuer un double enregistrement sur la première MME (506) et l'au moins une deuxième MME (502) en émettant une simple demande d'enregistrement qui permet d'obtenir que les informations contextuelles du dispositif terminal soient conservées aussi bien au niveau de la première MME (506) qu'au niveau de la deuxième MME (502).

4. Système de communication sans fil selon l'une des revendications précédentes dans lequel le processeur est couplé de manière opérationnelle à un élément de mémoire conçu pour stocker les informations contextuelles du dispositif terminal.

5. Système de communication sans fil selon la revendication 2 dans lequel le processeur de l'au moins une deuxième MME (502) est conçu pour effectuer au moins une des tâches suivantes :
terminaison et gestion : de messages de protocole NAS, de messages de protocole S1AP et de service radio général par paquets, GPRS, du contrôle de protocole de tunnelage, GTP-c, de message par une interface S11
surveillance de la mobilité du dispositif terminal dans une gestion de connexion de système par paquets évolué, ECM, en mode inactif et réaliser un transfert S1 dans un mode connecté ECM du dispositif terminal ;
appel d'une ou plusieurs fonctions de sélection de noeuds de réseau central qui se couplent à nouveau de manière opérationnelle à la première MME (506) lorsqu'une connexion avec celle-ci devient opérationnelle ;
déclenchement du dispositif terminal afin d'initier un processus de mise à jour de zone de surveillance, TAU, afin de faire en sorte que les informations contextuelles du dispositif terminal au niveau de l'au moins une deuxième MME (502) à transférer à la première MME (506), et l'au moins une deuxième MME (502) reviennent à un mode de fonctionnement de proxy.

6. Entité de gestion de mobilité proxy, MME (502) située dans un système de communication sans fil qui comprend une première MME supplémentaire la première MME étant opérationnelle et couplée de manière opérationnelle à la MME de proxy (502) via une liaison de connexion ; la MME de proxy (502) étant **caractérisée par** un processeur conçu pour :
construire et actualiser des informations contextuelles associées au dispositif terminal ;
recevoir une clé de sécurité, K_{ASME}, ou d'un vecteur d'authentification complet en provenance de la première Mme (506), de façon à ce que l'au moins une MME de proxy (502) soit capable d'utiliser la même association de sécurité entre le dispositif terminal et la première MME (506) ;
surveiller au moins un sous-ensemble des données du plan de contrôle entre le dispositif terminal et la première MME (506) ;
détecter soit une défaillance de liaison de communication entre l'au moins une MME de proxy (502) et la première MME (506) via la liaison de connexion soit que la première MME est considérée comme non opérationnelle et, en réponse à cela, commuter vers un deuxième mode de fonctionnement ; la MME de proxy (502) effectuant au moins un sous-ensemble de fonctionnalités MME de la première MME (506).

7. MME de proxy (502) selon la revendication 6 dans laquelle le processeur de la Mme de proxy (502) est outre conçu pour effectuer au moins une des tâches suivantes :
la signalisation du plan de contrôle vers l'avant à des dispositifs terminaux appropriés en mode ECM-IDLE ;
la réallocation d'une Globally Unique Temporary Identity (GUTI) qui pointe vers la deuxième MME (502) ;
la terminaison de messages de protocole Non-Access Stratum, NAS, reçus.

8. Procédé d'exploitation d'un système de communication sans fil comprenant un dispositif terminal, une première entière de gestion de mobilité MME (506) et une entité de gestion de mobilité de proxy Mme (502) de façon à ce que les deux MME (502, 506) soient conçues pour supporter des données de plan de contrôle pour le dispositif terminal ; le procédé étant caractérisé, au niveau de la MME de proxy (502) par :
la construction et l'actualisation d'informations contextuelles associées au dispositif terminal ;
la réception d'une clé de sécurité, K_{ASME}, ou d'un vecteur d'authentification complet en provenance de la première Mme (506), de façon à ce que l'au moins une MME de proxy (502) soit capable d'utiliser la même association de sécurité entre le dispositif terminal et la première MME (506) ;
la surveillance d'au moins un sous-ensemble des données du plan de contrôle entre le dispositif terminal et la première MME (506) ;
la détection soit d'une défaillance de liaison de communication entre l'au moins une MME de proxy (502) et la première MME (506) via la liaison de connexion soit que la première MME est considérée comme non opérationnelle et, en réponse à cela, la commutation vers un deuxième mode de fonctionnement ; et
en réponse à cela, la réalisation d'au moins un sous-ensemble de fonctionnalités MME de la première MME (506).

9. Produit de programme informatique non transitoire comprenant un code de programme exécutable pour un système de communication sans fil supportant des données de plan de contrôle avec un dispositif terminal à l'aide d'une entité de gestion de mobilité MME (506) et une entité de gestion de mobilité de proxy MME (502), le code de programme exécutable étant conçu pour exécuter le procédé selon la revendication 8, lorsqu'il est exécuté au niveau de la MME de proxy (502).
